# EUROPEAN PATENT SPECIFICATION

(11) **EP 2 565 102 B1**
(45) Date of publication and mention of the grant of the patent: **02.03.2016**
(21) Application number: 12182033.6
(22) Date of filing: 28.08.2012
(51) Int. Cl.: B62B 7/10, B62B 7/00

(54) **Collapsible pushchair**
Zusammenklappbarer Kinderwagen
Poussette pliable

(30) Priority: 02.09.2011 NL 2007332
(43) Date of publication of application: 06.03.2013
(73) Proprietor: Maxi Miliaan B.V., 5704 RD Helmond (NL)
(72) Inventor: Storm, Gerjan, 5651 ED Eindhoven (NL); Stokman, Petrus Henricus Maria, 6433 AX Hoensbroek (NL); van Dijk, John Gert Til, 5701 RT Helmond (NL)
(74) Representative: Veldman-Dijkers, Cornelia G. C.

(56) References cited:
- EP-A2- 2 141 058
- DE-U1- 29 910 609
- GB-A- 388 984
- GB-A- 2 431 140
- US-A1- 2005 098 982

## Description

### FIELD OF THE INVENTION

The invention relates to a collapsible pushchair comprising at least a frame provided with at least two rods being pivotally connected to each other, which frame is foldable from an erect configuration to a collapsed configuration and vice versa, wherein the frame is also provided with a lock to lock the frame in its erect configuration, the lock comprises at least two members, wherein a first member is swivelably connected at a first swivel to the first rod, a second member is swivelably connected at a second swivel to the second rod, and the first and second members are pivotally connected to each other at a distance from the first and second swivel at a pivot, wherein the second swivel is movable from a first position wherein the second swivel is located on one side of a virtual line through the pivot and the first swivel, in which first position the frame is locked in its erect configuration, via an intermediate position wherein the second swivel is located between the pivot and first swivel on the virtual line, to a second position wherein the second swivel is located on the other side of the virtual line, in which second position the frame is unlocked, and/or vice versa.

### BACKGROUND OF THE INVENTION

Such a collapsible pushchair is known from GB388984. By a first movement of the second swivel from one first side of the virtual line to the other second side, the frame is brought from the locked erect configuration to an unlocked configuration. From the unlocked configuration the frame can be folded into the collapsed configuration. By a second movement of the second swivel from the second side of the virtual line to the first side, the frame is brought from the unlocked almost erect configuration to an locked erect configuration. By the known pushchair an elongated U-shaped member provided with a footrest is being used for performing both the first movement as well as the second movement. For the second movement the user need to exert a pushing force on the footrest whilst for the first movement the user need to elevate the footrest by pulling at the footrest either by hand or by placing the upper side of his shoe behind the footrest and pull his foot towards himself.

A disadvantage of pulling at the footrest by hand is that the footrest might be dirty by a shoe placed earlier on the footrest for performing the second movement. However, pulling at the footrest with the upper side of a shoe has the disadvantage that the upper side of the shoe will get damaged.

### SUMMARY OF THE INVENTION

It is an object of the invention to provide a collapsible pushchair with a lock, wherein the operation of the lock can easily be done by hand or foot.

This object is achieved by the collapsible pushchair according to the invention in that the lock is provided with an auxiliary member being swivelably connected at a pivot to the frame, which auxiliary member cooperates with at least one member, wherein by swivelling the auxiliary member, the member is being swivelled with respect to the corresponding rod, so that the second swivel is being movable from the first position to the second position or vice versa.

The auxilliary member can be operated by the user for performing the first movement whilst by operating one of the members the second movement can be performed. The user can use his hand or foot to activate the auxilliary member or one of the members. Both movements can be done by a pushing movement or by a pulling movement.

The movement of the pivot from one side of the virtual line to the other side, can be done after the frame is brought in its erect configuration.

The distances between the first swivel and the pivot, between the second swivel and the pivot and between the first and second swivel determine the force which is needed to move the second swivel from one side of the virtual line to the other side. These distances can be optimized to the desired locking force., independently of the dimensions of the rods.

Preferably the first and second members are located relative low, for example near the wheels of the pushchair, so that the members can be operated by foot. In this manner the person who unfolds the pushchair can use his hands for holding the pushchair and/or holding a child before the child can take place in the pushchair.

It has to be noted that from EP2141058A2 of applicant a collapsible pushchair is known. The frame of this known pushchair comprises a number of rods being pivotably connected to each other. A seating cavity is defined within the frame, in which a seat is to be received. Some of the rods form a centrally located spine of the frame. In order to lock the spine in the erect configuration of the frame, first and second rigid rods are preferably curved such that, in the erect configuration of the spine, the pivotal interconnection defining the moveable spine joint is an over center pivot joint. This arrangement automatically locks the spine in its erect configuration.

However, a disadvantage of such a lock is that the shape and dimensions of the rigid rods need to be optimized for both its function as part of the centrally located spine as well as being part of the lock. Furthermore, by moving the frame to its erect configuration, a relatively large force must be overcome since the frame will be locked at the same time as reaching its erect configuration.

Another major disadvantage is that it is rather difficult to fold and unfold the pushchair since the user must pull or push at the rods themselves with a relatively large force to pivot them, with the risk that the fingers of his hands get stuck between the rods.

An embodiment of the collapsible pushchair according to the invention is characterized in that both the at least one member and the auxiliary member are operable by pushing thereon, wherein by pushing on the at least one member the lock is being locked, whilst by pushing on the auxiliary member the lock is being unlocked or vice versa.

In this manner a user can use a pushing force both by locking and unlocking the frame.

When locking the frame, a pushing force can be exerted on one of the members, whilst when unlocking the frame, a pushing force can be exerted via the auxiliary member on the other member, or vice versa. In both cases a user can use the sole of his shoe for exerting the pushing force, so that no damage will occur to the upper side of the shoes.

Another embodiment of the collapsible pushchair according to the invention is characterized in that the at least one member is provided with a pedal for swivelling the member with respect to the corresponding rod, so that the second swivel is being movable from the first position to the second position or vice versa.

Such a pedal can easily be operated by pressing on it by hand or by foot. In such a manner the rod can easily be swivelled.

With such a pedal it is possible to lock the frame by pushing on the pedal and to unlock the frame by pulling on the pedal.

Another embodiment of the collapsible pushchair according to the invention is characterized in that the pedal is operable by means of a foot of a user.

By means of a foot a relatively large force can be exerted on the pedal by pushing on the pedal.

Another embodiment of the collapsible pushchair according to the invention is characterized in that both the pedal and the auxiliary member are operable by pushing thereon by means of a foot of a user, wherein by pushing on the pedal the lock is being locked, whilst by pushing on the auxiliary member the lock is being unlocked.

In this manner, in both cases a user can use the sole of his shoe for exerting the pushing force, so that no damage will occur to the shoes. Such damage may occur to the upper side of the shoe when the foot is used to exert a pulling force on the pedal, wherein the upper side of the shoe is placed behind the pedal.

### BRIEF DESCRIPTION OF THE DRAWINGS

The invention will be explained in more detail with reference to the drawings, in which
figure 1A is a side view of an embodiment of a pushchair according to the invention in the erect and locked configuration of the frame,
figure 1B is an enlarged perspective view of the pushchair as shown in figure 1A,
figure 2A is a side view of the pushchair as shown in figure 1A in the erect but unlocked configuration of the frame,
figure 2B is an enlarged perspective view of the pushchair as shown in figure 2A,
figure 3A is a side view of the pushchair as shown in figure 1A in a partly collapsed configuration of the frame,
figure 3B is an enlarged perspective view of the pushchair as shown in figure 3A,
figure 4 is an enlarged perspective view of the pushchair as shown in figure 1A in a further partly collapsed configuration of the frame,
figure 5 is a side view of the pushchair as shown in figure 1A in another further partly collapsed configuration of the frame,
figure 6 is a side view of the pushchair as shown in figure 1A in a fully collapsed configuration of the frame,
figure 7 is a more detailed side view of the embodiment of a pushchair according to the invention in the erect and locked configuration of the frame,
figure 8 is an enlarged perspective view of the pushchair as shown in figure 7,
figure 9 is a side view of the pushchair as shown in figure 7 in the unlocked and partly collapsed configuration of the frame,
figure 10 is a side view of the pushchair as shown in figure 7 in a further partly collapsed configuration of the frame.

Like parts are indicated by the same reference numbers in the figures.

### DETAILED DESCRIPTION OF EMBODIMENTS

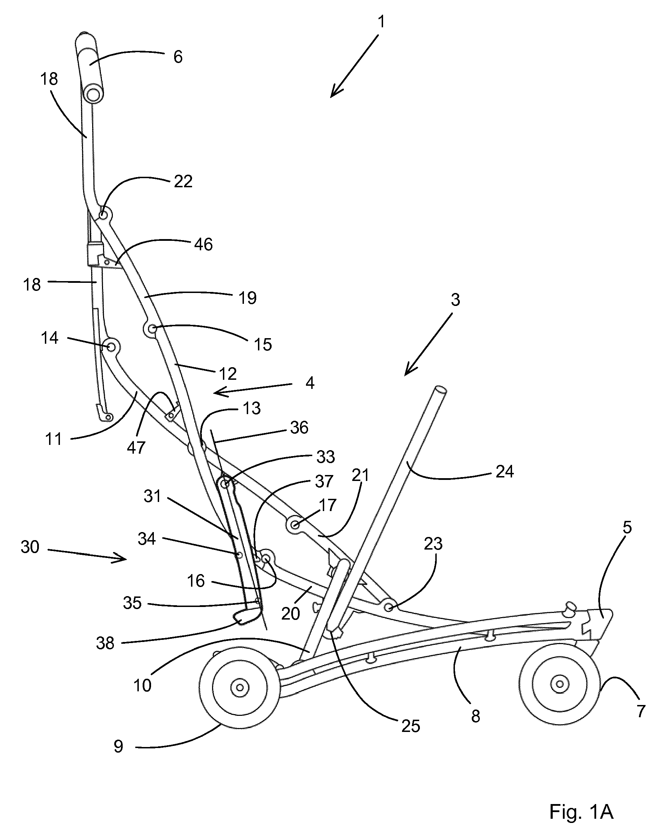

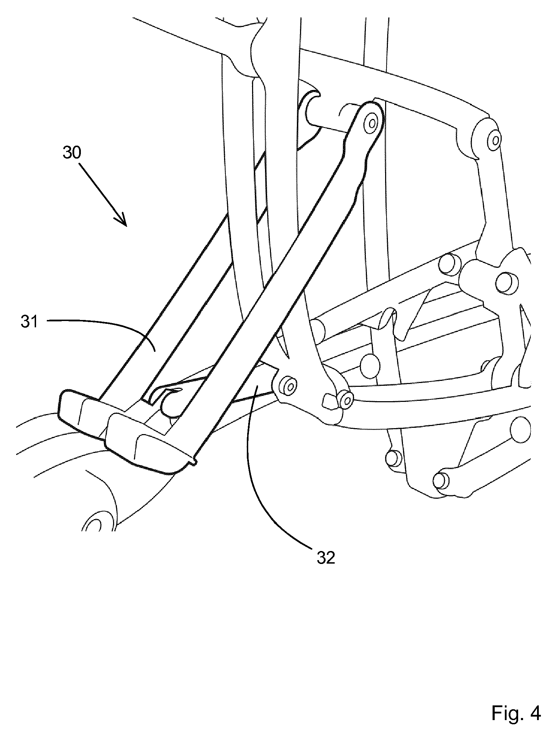

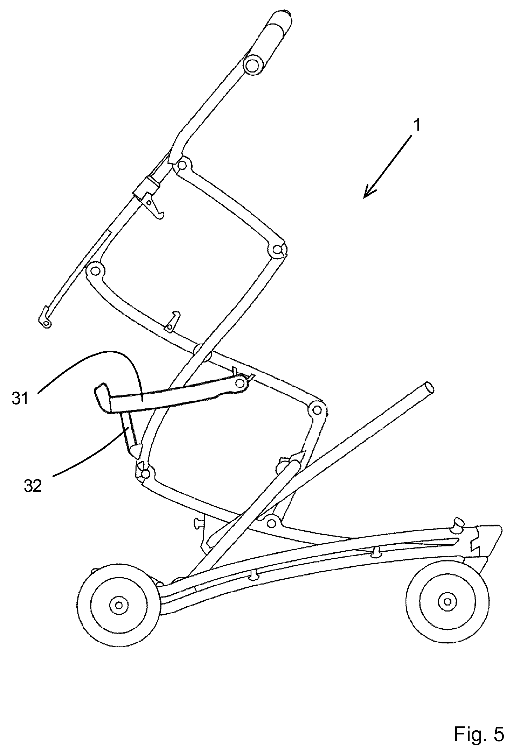

Figures 1a-6 show different views of an embodiment of a collapsible pushchair 1 according to the invention.

The pushchair 1 comprises a frame 3 provided with an elongate spine 4. The spine 4 is being curved to define a seating cavity within the frame 3 in which a flexible seat member seat (not shown) can be located.

The spine 4 is fixedly coupled at one end to a coupler 5 and is coupled at its other end to a handle assembly 6.

The frame 3 includes a wheel 7 mounted on an underside of the coupler 5, which provides in use of the frame 3 in its erect configuration, ground engaging support below the coupler 5.

The frame 3 also includes a pair of support arms 8 extending from the coupler 5. Each support arm 8 carrying a wheel 9 at one end and being pivotably coupled to the coupler 5 at its other end.

In the erect configuration of the frame 3, as is shown in Figure 1A, the support arms 8 are located relative to the coupler 5 so as space the wheels 9 from each other and provide ground engaging support below the seating cavity.

Each of the support arms 8 is linked to the spine 4 by means of an elongate, rigid, spine link rod 10 that is pivotably connected at one end to the support arm 8 and at its other end to the spine 4.

The spine 4 comprises first and second, elongated, rigid rods 11, 12 mutually interconnected at a pivot defining a moveable spine joint 13 lying part-way, preferably half-way, along the length of each rod 11, 12. The second elongated rod 12 is constituted by two spaced, parallel, rigid, sub-members such that the second rod 12 is bifurcated along its whole length and especially in the vicinity of the moveable joint 13.

Along the length of the second rod 12, the spacing between the sub-members is slightly greater than the (typically circular or ovaloid) diameter of the first rod 11 such that the moveable joint 13 may be constituted by a simple pivot pin that is fixed at either end to one of the sub-members and interconnects them so as to pass through an aperture extended from one side of the second rod 12 to the other in order to define a pivotably joint of per se known construction.

Each of the rods 11, 12 has pivotably connected at pivots 14, 15, 16, 17 thereto on each side of the moveable joint 13 a subsidiary rod 18, 9, 20, 21. Adjacent pairs of the subsidiary rods 18, 19; 20, 21 are pivotably secured together at pivots 22, 23 such that the spine 4 defines first and second closed loop kinematic linkages. Second subsidiary rod 19 is pivotably connected to the first subsidiary rod 18 part-way along the length of the first subsidiary rod 18. Third subsidiary rod 21 is pivotally connected to the fourth subsidiary rod 20 part-way along the length of the fourth subsidiary rod 20.

The pivotal connections of the subsidiary rods 18, 19, 20, 21 to the elongate rigid rods 11, 12 and to one another as appropriate are such that the movements of the rods of the respective kinematic linkages are essentially uniplanar (subject to minor deflections caused by tolerancing of the pivotable joints and connections). The plane in which the spine 4 is located extends parallel to the normal forward driving direction of the pushchair. The plane is located centrally in the frame 3.

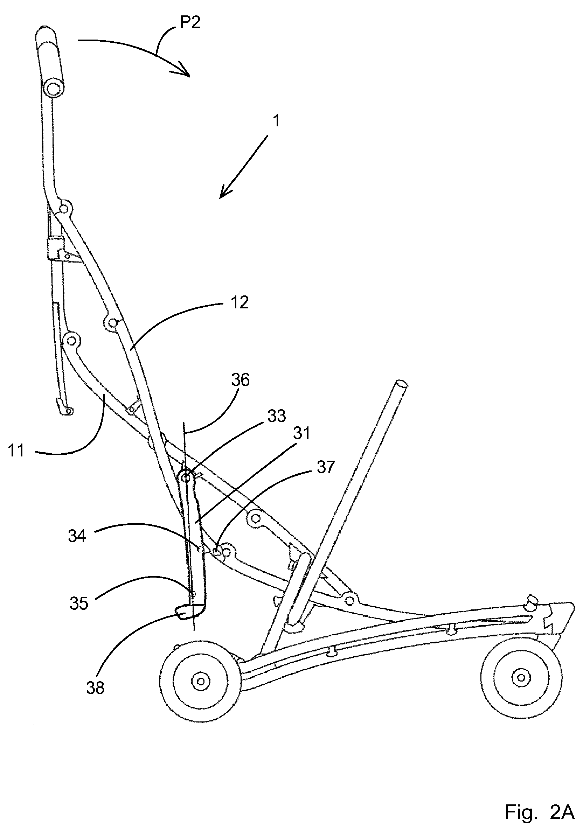

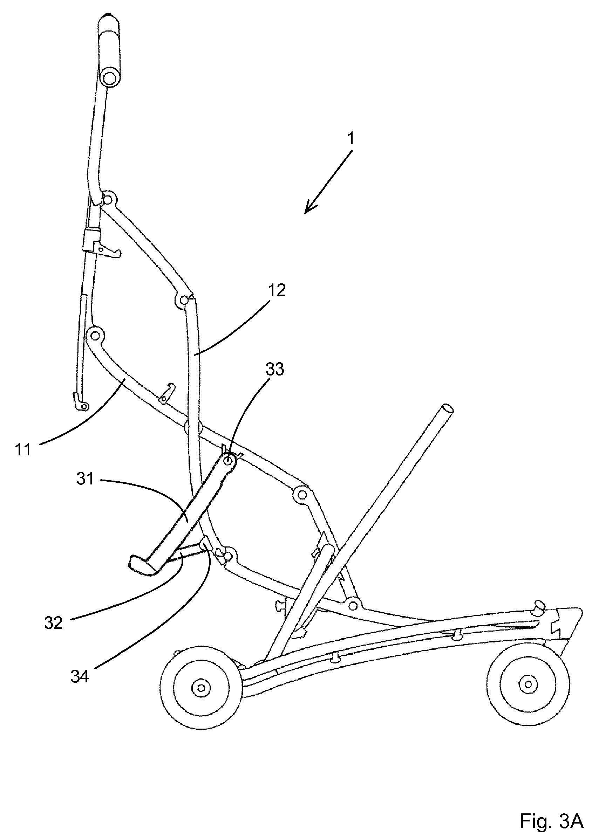

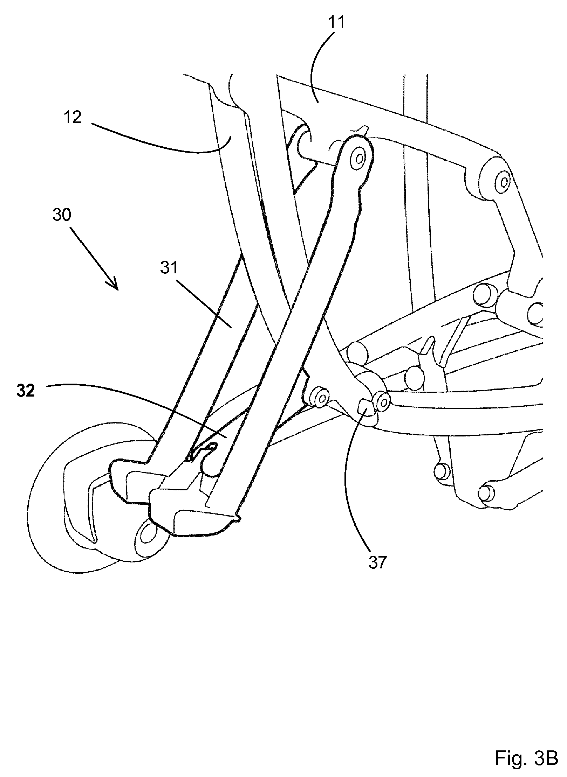

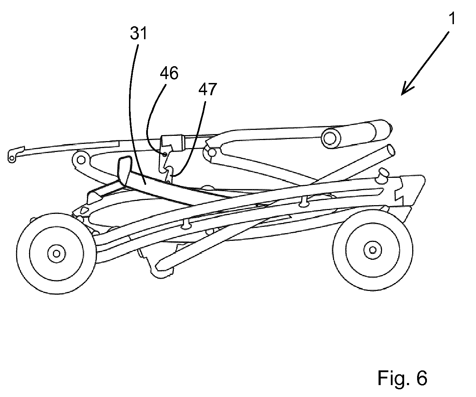

As a consequence the spine 4 is convertible between an erect configuration as shown in figure 1A via a partly collapsed configuration shown in figure 2A and via further collapsed configurations as shown in figures 3A-5 to a fully collapsed configuration as shown in figure 6.

Thus in the collapsed configuration of the spine 4 the rods lie generally parallel to and adjacent one another along their lengths as far as this is permitted by the shapes of the rods and the positions of the various pivotable joints and connections.

Each of the elongate, rigid, spine link rods 10 is pivotally connected at one end to the respective support arm 8 and at its other end to the subsidiary rod 21 of the spine 4.

Each of the rigid rods 11, 12 and subsidiary rods 18, 19, 20, 21 is curved to define the curved shape of the spine 4 in its erect configuration.

The frame 3 comprises first and second elongate, rigid, seat link rods 24 interconnected at a pivot defining a joint 25. The joint 25 is located on a plate mounted on the subsidiary rod 20. At ends remote of the joint 25 the seat link rods 24 are connected to parts of the flexible seat member seat (not shown).

The pushchair 1 as described above is similar to the pushchair 210 as shown in figures 12 to 16 of EP2141058A2 of applicant.

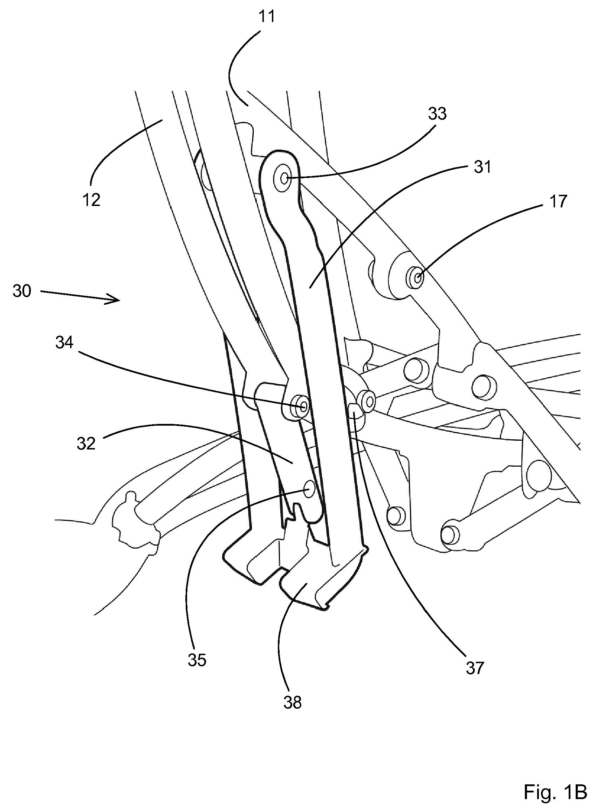

The pushchair 1 distinguishes from the known pushchair in that it comprises a lock 30 provided with two members 31, 32. The first member 31 is swivelably connected at a first swivel 33 to the first elongate rigid rod 11. The second member 32 is swivelably connected at a second swivel 34 to the second elongate rigid rod 12. The first member 31 is longer than the second member 32. The first member 31 is is bifurcated along its whole length except for the ends. The first and second members 31, 32 are pivotally connected to each other at a distance from the first and second swivel 33, 34 at a pivot 35. A virtual line 36 can be drawn through the pivot 35 and first swivel 33. In the situation as shown in figures 1A and 1B, the frame 3 is in its erect configuration and the second swivel 34 is located on one side of the virtual line 36 in a first position, wherein the frame 3 is locked in its erect configuration. In the situation as shown in the figures 1A and 1B the second swivel 34 is located on the left side of the virtual line 36.

In this first position, the first member 31 lies in abutment against a stop 37 on the second elongated rigid rod 12. The stop 37 prevents the first member 31 from pivoting in a counter clockwise direction about the first swivel 33 and thereby prevents collapsing of the spine 3.

The first member 31 is provided near one end with a pedal 38. The pedal 38 is located on another side of the pivot 35 than the swivel 34 of the second member 32.

The figures 2A-6 show in several steps the folding of the pushchair 1 from the erect configuration as shown in figures 1A and 1B to the fully collapsed configuration as shown in figure 6.

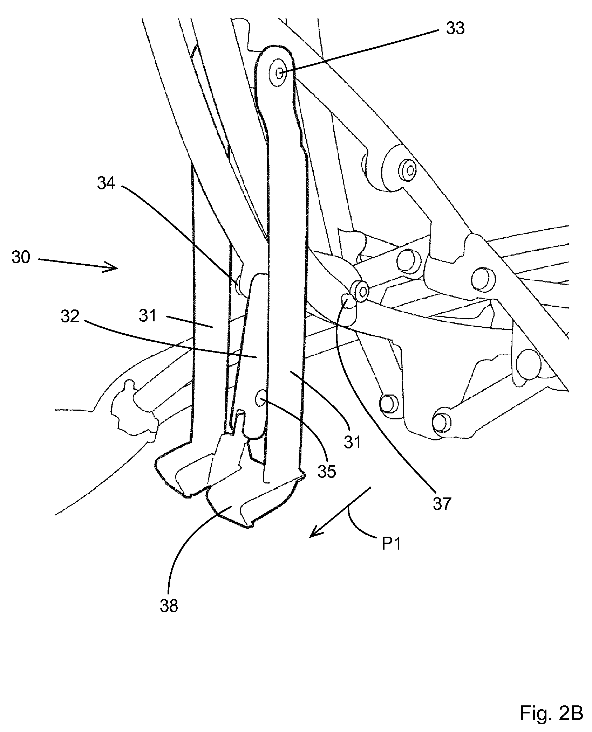

Before the frame 3 can be collapsed, the frame 3 needs to be unlocked. To unlock the frame 3 the user may pull at the pedal 38 in a direction indicted by arrow P1, wherein the second swivel 34 is being moved under force from the left side of the virtual line 36, via an intermediate position wherein the second swivel 34 is located on the virtual line 36 between the pivot 35 and the first swivel 33, to the right side of the virtual line 36 (see figure 2A and 2B).

The second swivel 34 is now in its second position in which the frame 3 is unlocked and the members 31, 32 do no longer prevent the frame 3 from collapsing.

In this second position, the first member 31 can easily be swivelled about the first swivel 33 in clockwise direction away from the pivot 17 on the first rod 11, when the rigid rods 11, 12 will be spread apart to collapse the pushchair 1.

To fold the pushchair 1 the user will push the handle assembly 6 is the direction as indicated by arrow P2 towards the coupler 5 via the situations as shown in the figures 3A, 3B, 4, 5 towards the fully collapsed configuration as shown in figure 6.

When moving the spine 4 from its erect configuration to its collapsed configuration, this in turn causes movement of the support arms 8 and the other rods and members. Movement of the frame 3 from its erect configuration to its collapsed configuration may be effected in a one-handed operation.

To erect the frame 3 from its collapsed configuration as shown in figure 6 to its erect configuration as shown in figure 1A, the user simple pulls the handle assembly 6 away from the coupler 5 until the frame 3 is in the erect configuration. The members 31, 32 will than be in the positions as shown in figure 2B, wherein the second swivel 34 is located on the right side of the virtual line 36. To lock the frame in the erect configuration, the user pushes preferably with his foot on the pedal 38 to move the second swivel 34 from the right to the left of the virtual line 36.

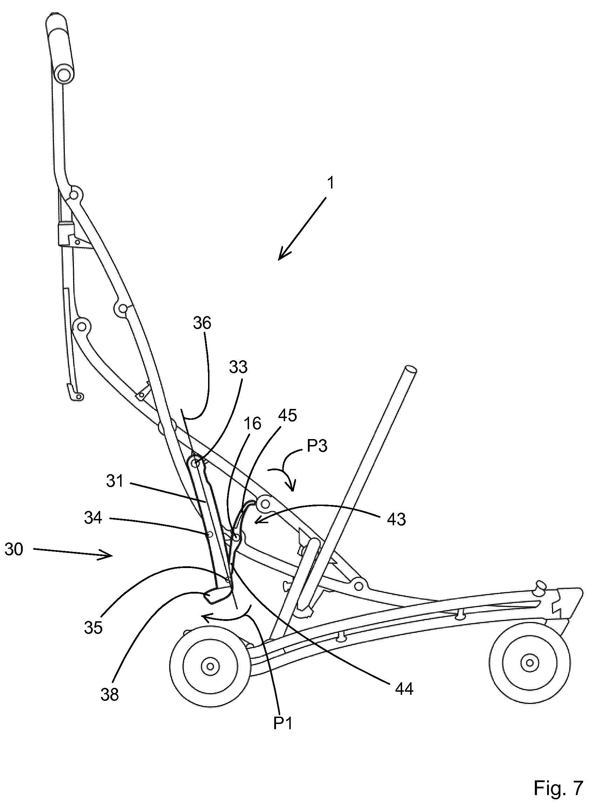

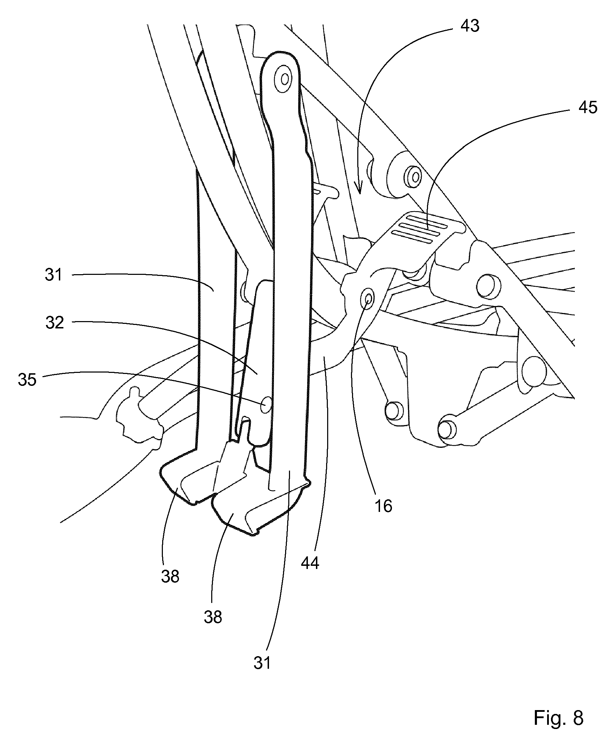

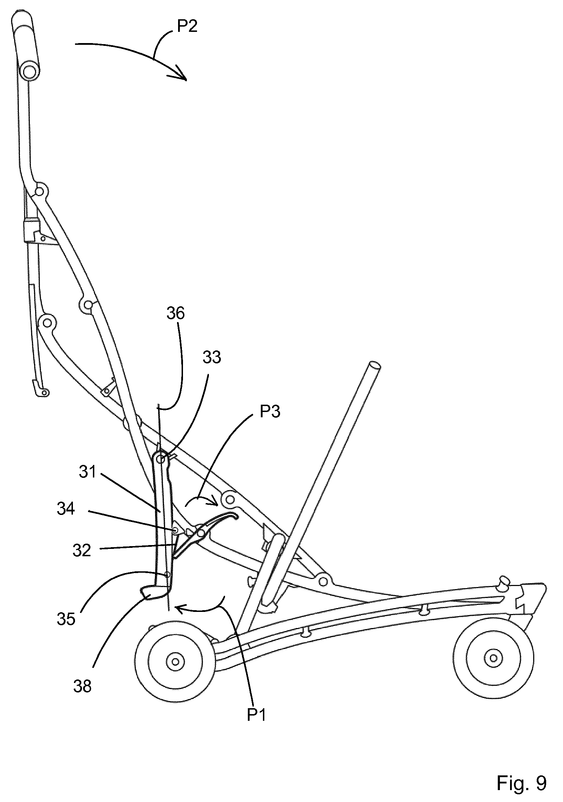

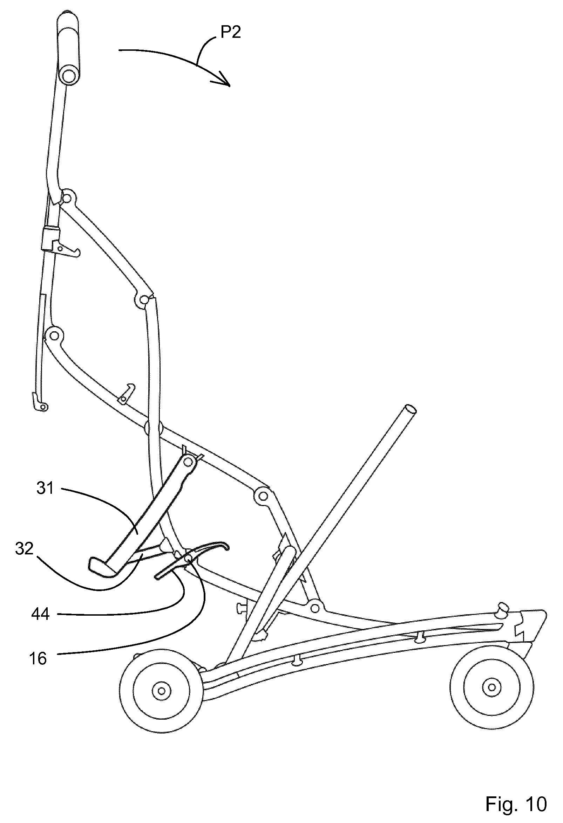

Figures 7-10 show more detailed views of a collapsible pushchair 1 according to the invention. As can be seen the lock 30 is further provided with an auxiliary member 43 being swivelably connected halfway its length at auxiliary pivot 16 of the second rod 12. In the locked position of the frame 4, as shown in figure 7, one part 44 of the auxiliary member 43 lying on one side of the auxiliary pivot 16 abuts against the member 32, whilst the other parts 45 of the auxiliary member 43 on the other side of the auxiliary pivot 16 can be used by a user to be pushed on, for example by means of a foot.

The auxiliary member 43 is bifurcated with two parts 45, each on one side of the second elongated rod 12. Each part 45 comprises a pedal. When pushing on the pedal of part 45, the auxiliary member 43 will be pivoted in the direction as indicated by arrow P3, wherein a pushing force is being exerted on the member 32 so that the second member 32 will be pivoted in the direction as indicated by arrow P1 and the second swivel 34 will be moved from the right side of the virtual line 36 to the left side of the virtual line to unlock the frame 4. After unlocking the frame 4, it can be collapsed in the manner as described above.

When the frame 4 need to be locked, the user may push on the pedal 38. So both for locking and unlocking the frame 4, the user can use the sole of his shoe to exert a pushing force.

As can be seen the pushchair 1 is provided with a first hook 46 on the subsidiary rod 18 which may be locked to the subsidiary rod 19 as an addition lock to prevent unlocking of the frame when a person unintentionally moves the pedal 38 in the direction indicated by arrow P1. Before unlocking the lock 30, the additional lock needs te be unlocked. Such an additional lock is well known in the art and needs not to be further explained. In the collapsed configuration the first hook 46 can be coupled with a second hook 47 on the rod 11 to keep the pushchair 1 in its collapsed configuration (see figure 6).

It has to be noted that instead of the stop 37 other kinds of stops or other means can be used to define the first position of the second swivel 33.

Other variations to the disclosed embodiments can be understood and effected by those skilled in the art in practicing the claimed invention, from a study of the drawings, the disclosure, and the appended claims. In the claims, the words like "comprising" and "having" do not exclude other elements or steps, and the indefinite article "a" or "an" does not exclude a plurality.

## Claims

1. Collapsible pushchair (1) comprising at least a frame (3) provided with at least two rods (11, 12) being pivotally connected to each other, which frame (3) is foldable from an erect configuration to a collapsed configuration and vice versa, wherein the frame (3) is also provided with a lock (30) to lock the frame (3) in its erect configuration, the lock (30) comprises at least two members (31, 32), wherein a first member (31) is swivelably connected at a first swivel (33) to the first rod (11), a second member (32) is swivelably connected at a second swivel (34) to the second rod (12), and the first and second members (31, 32) are pivotally connected to each other at a distance from the first and second swivel (33, 34) at a pivot (35), wherein the second swivel (34) is movable from a first position wherein the second swivel (34) is located on one side of a virtual line (36) through the pivot (35) and the first swivel (33), in which first position the frame (3) is locked in its erect configuration, via an intermediate position wherein the second swivel (34) is located between the pivot (35) and first swivel (33) on the virtual line (36), to a second position wherein the second swivel (34) is located on the other side of the virtual line (36), in which second position the frame (3) is unlocked, and/or vice versa, **characterized in that** the lock (30) is provided with an auxiliary member (43) being swivelably connected at an auxiliary pivot (16) to the frame (3), which auxiliary member (43) cooperates with at least one member (31, 32), wherein by swivelling the auxiliary member (43), the member (31, 32) is being swivelled with respect to the corresponding rod (11, 12), so that the second swivel (34) is being movable from the first position to the second position or vice versa.

2. Collapsible pushchair (1) according to claim 1, **characterized in that** both the at least one member (31, 32) and the auxiliary member (43) are operable by pushing thereon, wherein by pushing on the at least one member (31, 32) the lock (30) is being locked, whilst by pushing on the auxiliary member (43) the lock (30) is being unlocked or vice versa.

3. Collapsible pushchair (1) according to claim 1 or 2, **characterized in that** the at least one member (31, 32) is provided with a pedal (38) for swivelling the member with respect to the corresponding rod (1, 2), so that the second swivel (34) is being movable from the first position to the second position or vice versa.

4. Collapsible pushchair (1) according to claim 3, **characterized in that** the pedal (38) is operable by means of a foot of a user.

5. Collapsible pushchair (1) according to claim 4, **characterized in that** at least the locking can be done by pushing with a foot on the pedal (38).

6. Collapsible pushchair (1) according to one of the preceding claims 3 - 5, **characterized in that** both the pedal (38) and the auxiliary member (43) are operable by pushing thereon by means of a foot of a user, wherein by pushing on the pedal (38) the lock (30) is being locked, whilst by pushing on the auxiliary member (43) the lock (30) is being unlocked.

7. Collapsible pushchair (1) according to one of the preceding claims, **characterized in that**, the frame (3) is provided with a stop (37), wherein in the first position at least one of the members (31, 32) is in abutment with the stop (37).

8. Collapsible pushchair (1) according to claim 7, **characterized in that**, the second rod (12) is provided with the stop (37), wherein in the first position the first member (31) is in abutment with the stop (37).

## Patentansprüche

1. Zusammenfaltbarer Kinderwagen (1) mit mindestens einem Rahmen (3), der mit mindestens zwei miteinander schwenkbar verbundenen Stangen (11,12) versehen ist, wobei der Rahmen (3) aus einer aufgestellten Konfiguration in eine gefaltete Konfiguration und umgekehrt gefaltet werden kann, wobei der Rahmen (3) auch mit einer Sperre (30) zum Arretieren des Rahmens (3) in aufgerichteter Konfiguration versehen ist, wobei die Sperre (30) mindestens zwei Bauteile (31,32) umfasst, wobei das erste Bauteil (31) an einem ersten Drehpunkt (33) mit der ersten Stange (11) schwenkbar verbunden und das zweite Bauteil (32) an einen zweiten Drehpunkt (34) mit der zweiten Stange schwenkbar verbunden ist und erstes und zweites Bauteil (31,32) miteinander an einem zum ersten und zweiten Drehpunkt (33,34) beabstandeten Gelenk (35) miteinander verbunden sind, wobei der zweite Drehpunkt (34) aus einer ersten Lage, in der sich der zweite Drehpunkt (34) auf einer Seite einer virtuellen Linie (36) durch das Gelenk (35) und den ersten Drehpunkt (33) befindet und in der der Rahmen (3) in aufgestellter Konfiguration arretiert ist, über eine Zwischenposition, in welcher sich der zweite Drehpunkt (34) zwischen dem Gelenk (35) und dem ersten Drehpunkt (33) auf der virtuellen Linie (36) befindet, in eine zweite Lage, in welcher sich der zweite Drehpunkt (34) auf der anderen Seite der virtuellen Linie (36) befindet und wobei der Rahmen (3) gelöst ist, und/oder umgekehrt, bewegt werden kann, **dadurch gekennzeichnet, dass** die Sperre (30) mit einem Hilfsglied (43) versehen ist, welches an einen Hilfsgelenk (16) drehbar mit dem Rahmen (3) verbunden ist, wobei das Hilfsglied (43) mit mindestens einem Bauteil (31,32) zusammenwirkt, wobei durch Schwenken des Hilfsglieds (43) das Bauteil (31,32) bezüglich des entsprechenden Stange (11,12) geschwenkt wird, so dass der zweite Drehpunkt (34) aus der ersten Lage in die zweite Lage bewegt werden kann oder umgekehrt.

2. Zusammenfaltbarer Kinderwagen (1) nach Anspruch 1, **dadurch gekennzeichnet, dass** sowohl das mindestens eine Bauteil (31,32) als auch das Hilfsglied (43) durch darauf Drücken betätigt werden können, wobei durch Drücken des mindestens einen Bauteils (31,32) die Sperre (30) arretiert wird, während durch Drücken auf das Hilfsglied (43) die Sperre (30) gelöst wird oder umgekehrt.

3. Zusammenfaltbarer Kinderwagen (1) nach Abschnitt 1 oder 2, **dadurch gekennzeichnet, dass** das mindestens eine Bauteil (31,32) mit einem Pedal (38) zum Schwenken des Bauteils bezüglich der entsprechenden Stange (1,2) versehen ist, so dass der zweite Drehpunkt (34) aus der ersten Lage in die zweite Lage bewegt werden kann oder umgekehrt.

4. Zusammenfaltbarer Kinderwagen (1) nach Anspruch 3, **dadurch gekennzeichnet, dass** das Pedal mit einem Fuß eines Benutzers betätigt werden kann.

5. Zusammenfaltbarer Kinderwagen (1) nach Anspruch 4, **dadurch gekennzeichnet, dass** durch Drücken des Pedals (38) mit einem Fuß zumindest das Arretieren bewirkt werden kann.

6. Zusammenfaltbarer Kinderwagen (1) nach einem der vorangehenden Ansprüche 3-5, **dadurch gekennzeichnet, dass** sowohl das Pedal (38) als auch das Hilfsglied (43) durch Drücken mit dem Fuß eines Benutzers betätigt werden können, wobei durch Drücken auf das Pedal (38) die Sperre (30) arretiert wird, während durch Drücken auf das Hilfsglied (43) die Sperre (30) gelöst wird.

7. Zusammenfaltbarer Kinderwagen (1) nach einem der vorangehenden Ansprüche, **dadurch gekennzeichnet, dass** der Rahmen (3) mit einem Anschlag (37) versehen ist, wobei in der ersten Lage mindestens ein Bauteil (31,32) am Anschlag (37) anliegt.

8. Zusammenfaltbarer Kinderwagen (1) nach Anspruch 7, **dadurch gekennzeichnet, dass** die zweite Stange (12) mit dem Anschlag (37) versehen ist, wobei in der ersten Lage das erste Bauteil (31) am Anschlag (37) anliegt.

## Revendications

1. Poussette pliable (1) comprenant au moins un cadre (3) doté d'au moins deux tiges (11, 12) étant reliées de manière pivotante l'une à l'autre, lequel cadre (3) peut être plié d'une configuration déployée vers une configuration pliée et vice versa, dans laquelle le cadre (3) est également doté d'un verrou (30) pour verrouiller le cadre (3) dans sa configuration déployée, le verrou (30) comprenant au moins deux éléments (31, 32), dans laquelle un premier élément (31) est relié de manière articulée au niveau d'une première articulation (33) à la première tige (11), un second élément (32) est relié de manière articulée au niveau d'une seconde articulation (34) à la seconde tige (12), et les premier et second éléments (31, 32) sont reliés de manière pivotante l'un à l'autre à distance de la première et de la seconde articulation (33, 34) au niveau d'un pivot (35), dans laquelle la seconde articulation (34) est mobile d'une première position dans laquelle la seconde articulation (34) est située sur un côté d'un axe virtuel (36) à travers le pivot (35) et la première articulation (33), dans laquelle première position le cadre (3) est verrouillé dans sa position déployée, via une position intermédiaire dans laquelle la seconde articulation (34) est située entre le pivot (35) et la première articulation (33) sur l'axe virtuel (36), vers une seconde position dans laquelle la seconde articulation (34) est située sur l'autre côté de l'axe virtuel (36), dans laquelle seconde position le cadre (3) est déverrouillé, et/ou vice versa, **caractérisée en ce que** le verrou (30) est doté d'un élément auxiliaire (43) relié de manière articulée au niveau d'un pivot auxiliaire (16) au cadre (3), lequel élément auxiliaire (43) coopère avec au moins un élément (31, 32), dans laquelle, en faisant tourner l'élément auxiliaire (43), on fait tourner l'élément (31, 32) par rapport à la tige correspondante (11, 12), de telle sorte que la seconde articulation (34) soit mobile de la première position vers la seconde position ou vice versa.

2. Poussette pliable (1) selon la revendication 1, **caractérisée en ce qu'**à la fois l'au moins un élément (31, 32) et l'élément auxiliaire (43) sont actionnables en poussant sur ceux-ci, dans laquelle en poussant sur l'au moins un élément (31, 32), le verrou (30) est verrouillé, alors qu'en poussant sur l'élément auxiliaire (43), le verrou (30) est déverrouillé ou vice versa.

3. Poussette pliable (1) selon la revendication 1 ou 2, **caractérisée en ce que** l'au moins un élément (31, 32) est doté d'une pédale (38) destinée à faire tourner l'élément par rapport à la tige correspondante (1, 2), de telle sorte que la seconde articulation (34) soit mobile de la première position vers la seconde position ou vice versa.

4. Poussette pliable (1) selon la revendication 3, **caractérisée en ce que** la pédale (38) est utilisable au moyen d'un pied d'un utilisateur.

5. Poussette pliable (1) selon la revendication 4, **caractérisée en ce qu'**au moins le verrouillage peut être effectué en poussant avec un pied sur la pédale (38).

6. Poussette pliable (1) selon l'une des revendications 3 à 5 précédentes, **caractérisée en ce qu'**à la fois la pédale (38) et l'élément auxiliaire (43) sont actionnables en poussant sur ceux-ci au moyen d'un pied d'un utilisateur, dans laquelle en poussant sur la pédale (38), le verrou (30) est verrouillé, alors qu'en poussant sur l'élément auxiliaire (43), le verrou (30) est déverrouillé.

7. Poussette pliable (1) selon l'une des revendications précédentes, **caractérisée en ce que** le cadre (3) est doté d'une butée (37), dans laquelle dans la première position, au moins l'un des éléments (31, 32) est en appui avec la butée (37).

8. Poussette pliable (1) selon la revendication 7, **caractérisée en ce que** la seconde tige (12) est dotée de la butée (37), dans laquelle dans la première position, le premier élément (31) est en appui avec la butée (37).
